# EUROPEAN PATENT APPLICATION

(11) **EP 4 661 185 A1**
(43) Date of publication of application: **10.12.2025**
(21) Application number: 24785103.3
(22) Date of filing: 28.03.2024
(51) Int. Cl.: H01M 50/35, H01M 10/6556, H01M 10/613, H01M 10/6563, H01M 50/204, H01M 50/273

(54) **BATTERY PACK**

(30) Priority: 03.04.2023 KR 20230043390
(71) Applicant: LG Energy Solution, Ltd., Seoul 07335 (KR)
(72) Inventor: JANG, Byung Do, Daejeon 34122 (KR); CHOI, Jong Hwa, Daejeon 34122 (KR)
(74) Representative: Plasseraud IP
(86) International application number: PCT/KR2024/003924
(87) International publication number: WO 2024/210396

(57) **Abstract**

A battery pack includes a pack body, and a cooling device outside the pack body. The pack body includes a plurality of battery cells stacked in a first direction, a first case configured to accommodate the plurality of battery cells and including a first cooling channel configured to cool the plurality of battery cells, and a second case defining an inner space for accommodation of the plurality of battery cells together with the first case. The cooling device includes a second cooling channel provided on the second case and configured to cool the plurality of battery cells while in contact with the second case. The second case includes two or more concave portions configured to accommodate the cooling device, and a venting flow path provided between the concave portions and configured to discharge a gas generated in the plurality of battery cells.

## Description

### [Cross Reference to Related Applications]

This application claims the benefit of priority based on Korean Patent Application No. 10-2023-0043390, filed on April 3, 2023, and the entire content of the Korean patent application is incorporated herein by reference.

### [Technical Field]

The present invention relates to a battery pack, and more particularly, to a battery pack from which a gas is smoothly discharged without significantly sacrificing cooling performance of battery cells when a thermal event occurs and in which the battery cells are safely protected even when cooling fluid leaks.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

Recently, the demand for large-capacity battery packs applicable to electric vehicles, etc. has been increasing. In a large-capacity battery pack mounted in a vehicle, a thermal event may occur due to an increase in temperature in some battery cells during electrical charging/discharging of a plurality of battery cells. In this case, a high-temperature gas, flames, and sparks discharged from the battery cells may move to an adjacent battery cell (or adjacent battery cells), causing thermal runaway to occur in the adjacent battery cell(s) or secondary gas explosion.

Therefore, there is a growing need for a method of preventing the propagation of the thermal event to an adjacent battery cell (or adjacent battery cells) even when the thermal event occurs in some of the plurality of battery cells.

### [Disclosure]

### [Technical Problem]

The present invention is directed to providing a battery pack from which a gas is smoothly discharged without significantly sacrificing cooling performance of battery cells when a thermal event occurs and in which the battery cells are safely protected even when cooling fluid leaks.

### [Technical Solution]

An aspect of the present invention provides a battery pack in a vertical coordinate system defined by a first direction, a second direction, and a third direction that are perpendicular to one another, the battery pack including a pack body, and a cooling device outside the pack body, in which the pack body includes a plurality of battery cells stacked in the first direction, a lower case configured to accommodate the plurality of battery cells and including a first cooling channel configured to cool the plurality of battery cells, and an upper case defining an inner space for accommodation of the plurality of battery cells, together with the lower case, the cooling device includes a second cooling channel provided on the upper case and configured to cool the plurality of battery cells while in contact with the upper case, and the upper case includes two or more concave portions configured to accommodate the cooling device, and a venting flow path provided between the concave portions and configured to discharge a gas generated in the plurality of battery cells.

In some embodiments, the second cooling channel may extend in the first direction, and the concave portions may be provided to overlap cell leads of the plurality of battery cells stacked in the first direction.

In some embodiments, each of the plurality of battery cells may include a first cell lead and a second cell lead at opposite ends thereof in the second direction, one of the concave portions may be provided to overlap the first cell leads, which are arranged in the first direction, in the third direction, and another of the concave portions may be provided to overlap the second cell leads, which are arranged in the first direction, in the third direction.

In some embodiments, the venting flow path may extend in the first direction between the first cell leads and the second cell leads that are arranged in the first direction.

In some embodiments, a direction in which a cooling fluid flows through the second cooling channel flows and a direction in which a gas flows through the venting flow path may be opposite to each other.

In some embodiments, the upper case may be formed of aluminum or an aluminum alloy, and a surface of the upper case facing the plurality of battery cells may be fire-resistant surface treated.

In some embodiments, an inlet part of the second cooling channel may be provided with an inlet port, and an outlet part of the second cooling channel may be provided with an outlet port, and each of the inlet port and the outlet port may extend to be spaced apart from the pack body and connected to an external conduit.

In some embodiments, the venting flow path may be provided by a venting channel part between the two or more concave portions, and may be in fluid communication with a venting device on the lower case.

In some embodiments, a thickness of the upper case at the concave portion in the third direction, a thickness of the upper case at the venting channel part in the third direction, and a thickness of the upper case between the concave portion and the venting channel part may be substantially same.

In some embodiments, a thickness of the upper case may be substantially constant over an entire area.

In some embodiments, the cooling device may be coupled to the upper case by brazing.

Another aspect of the present invention provides a battery pack in a vertical coordinate system defined by a first direction, a second direction, and a third direction that are perpendicular to one another, the battery pack including a plurality of battery cells stacked in the first direction, a lower case configured to accommodate the plurality of battery cells and including a first cooling channel configured to cool the plurality of battery cells, and an upper case configured to define an inner space for accommodation of the plurality of battery cells, together with the lower case, in which the upper case has an uneven shape, has a constant thickness, and includes a venting flow path on one surface of the upper case to discharge a gas generated in the plurality of battery cells, and a plurality of concave portions on the other surface of the upper case.

In some embodiments, the battery pack may further include a cooling device accommodated in the plurality of concave portions, and including a cooling channel for cooling the plurality of battery cells.

In some embodiments, the battery pack may further include an additional cooling channel in the lower case to cool the plurality of battery cells.

In some embodiments, a venting channel part defining the venting flow path and the concave portions may have complementary shapes.

### [Advantageous Effects]

A battery pack according to embodiments of the present invention is capable of smoothly discharging a gas without significantly sacrificing cooling performance of battery cells when a thermal event occurs, and safely protecting the battery cells even when cooling fluid leaks.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery pack according to example embodiments of the present invention.
FIG. 2 is a perspective view of some components of a battery pack according to example embodiments.
FIG. 3 is an exploded perspective view of major parts of an upper case and a cooling device of FIG. 1.
FIG. 4 is a perspective view of a battery pack according to example embodiments of the present invention.
FIG. 5 is a partial cross-sectional perspective view of a cross section of the battery pack of FIG. 4 taken along line A-A'.
FIG. 6 is a partial cross-sectional view of the cross section of the battery pack of FIG. 4 taken along line A-A'.
FIG. 7 is a partially enlarged view of a part B of FIG. 4.
FIG. 8 is a cross-sectional view of a cooling device according to example embodiments of the present invention.
FIG. 9 is a cross-sectional view of a cooling device according to additional example embodiments of the present invention.

### [Best Mode]

Hereinafter, embodiments of the concept of the present invention will be described in detail with reference to the accompanying drawings. However, embodiments of the concept of the present invention may be embodied in many different forms and thus the scope of the present invention should not be interpreted as being limited by the embodiments described below. It should be understood that the embodiments of the concept of the present invention are provided to more completely describe the concept of the present invention to those of ordinary knowledge in the art. The same reference numerals denote the same elements throughout the specification. Furthermore, in the drawings, various elements and areas are shown schematically. Therefore, the concept of the present invention is not limited by the relative sizes of elements or the intervals therebetween shown in the accompanying drawings.

Terms such as first and second may be used to describe various components but the components are not limited by the terms. These terms are used only for the purpose of distinguishing one component from another. For example, a first component may be referred to as a second component without departing from the scope of the present invention, and similarly, the second component may be referred to as the first component.

The terms used in this application are only used to describe certain embodiments and are not intended to limit the concept of the present invention. As used herein, the singular expressions are intended to include plural forms as well, unless the context clearly dictates otherwise. It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof.

Unless otherwise defined, all terms (including technical and scientific terms) used herein have the same meaning as commonly understood by one of ordinary skill in the technical field to which the concept of the present invention pertains. In addition, terms commonly used and defined in dictionaries should be interpreted as having a meaning consistent with the context of the related art and should not be interpreted in an overly formal sense unless explicitly defined herein.

When an embodiment may be implemented differently, certain operations may be performed in an order different from that described below. For example, two operations described consecutively may be performed substantially concurrently or in an order reverse to that described below.

It will be expected that the shapes of components illustrated in the accompanying drawings may vary, for example, according to manufacturing technology and/or tolerances. Therefore, embodiments of the present invention should not be construed as being limited by a specific shape of each region illustrated in the present specification but should be understood to cover, for example, a change in the shape of each region, caused during a manufacture process. As used herein, the term "and/or" includes any and all combinations of one or more of the associated listed items. In addition, the term "substrate" used in this specification may refer to a substrate itself, or a stacked structure including a substrate and a predetermined layer or film formed on its surface. In addition, the expression "surface of the substrate" used herein should be understood to mean an exposed surface of the substrate or an outer surface of a layer or film formed on the substrate.

### (First Embodiment)

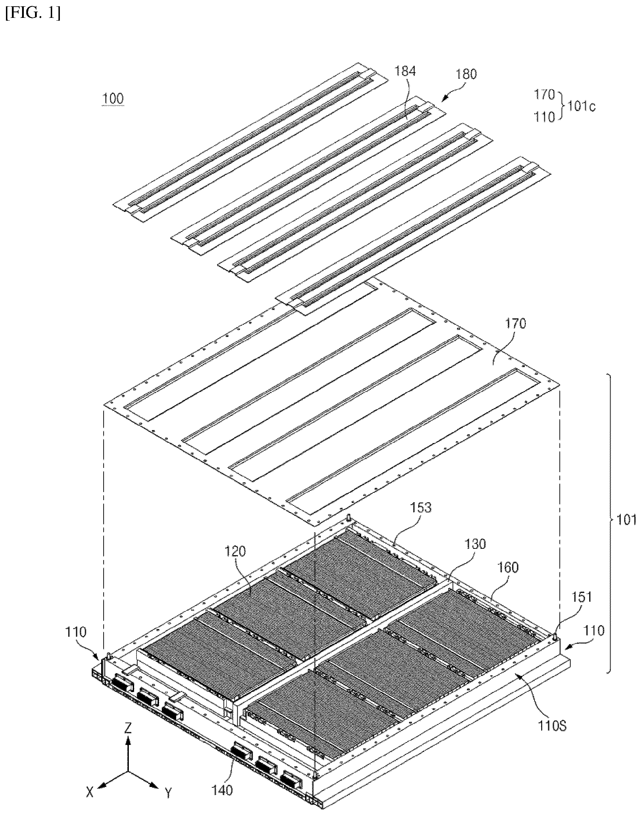

FIG. 1 is a perspective view of a battery pack 100 according to example embodiments of the present invention.

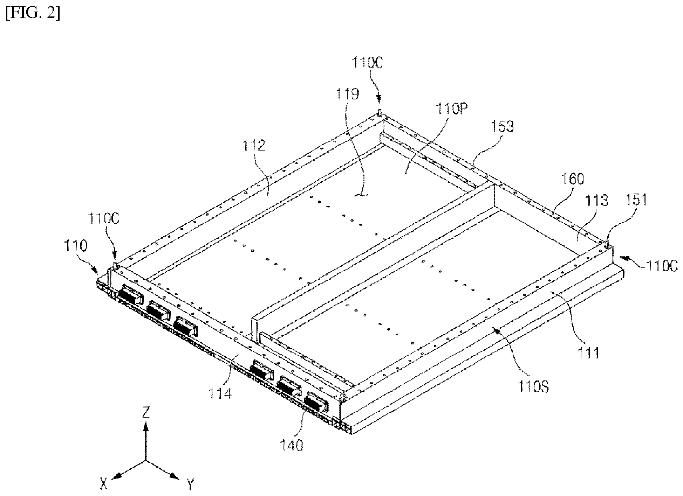

FIG. 2 is a perspective view of some components of the battery pack 100 according to example embodiments.

Referring to FIGS. 1 and 2, the battery pack 100 may include a pack body 101 and a cooling device 180 outside the pack body 101. The pack body 101 may include a lower case 110, a plurality of battery cells 120, a center beam 130, a plurality of venting devices 140, a pack gasket 160, and an upper case 170. The battery pack 100 is a final form of a battery system mounted on a mobility or the like.

A pack case 101c corresponding to a housing of the pack body 101 may include the lower case 110 and the upper case 170.

The lower case 110 may provide an inner space 119 for mounting a plurality of battery cells 120 therein. In some embodiments, the lower case 110 may include a plate part 110P and a side wall 110S. Two directions substantially parallel to the plate part 110P will be defined as a first direction (e.g., an X-axis direction) and a second direction (e.g., a Y-axis direction), and a direction substantially perpendicular to the plate part 110P of the lower case 110 will be defined as a third direction (e.g., a Z-axis direction).

FIG. 1 illustrates that the battery pack 100 is defined in a vertical coordinate system defined by the first direction along an X-axis, the second direction along a Y-axis, and the third direction along a Z-axis that are perpendicular to one another but the first, second and third directions are not particularly limited as long as they are relatively perpendicular to one another.

The plurality of battery cells 120 may be on the plate part 110P of the lower case 110. The plate part 110P may support the plurality of battery cells 120. The plate part 110P may include an upper surface and a lower surface that are substantially parallel to each other. The upper surface of the plate part 110P may face the plurality of battery cells 120. The lower surface of the plate part 110P is opposite to the upper surface of the plate part 110P. In some embodiments, the battery cells 120 may be packaged in the form of a battery module and placed in the lower case 110. It will be apparent to those of ordinary skill in the art that the battery cells 120 may be placed on the lower case 110 after being packaged in various types of frames or alone.

The side wall 110S may horizontally surround the plurality of battery cells 120. The side wall 110S may protect the plurality of battery cells 120 laterally. The side wall 110S may include a first side wall 111, a second side wall 112, a third side wall 113, and a fourth side wall 114. The first to fourth side walls 111, 112, 113, and 114 may be fixed to one another by a method such as friction stir welding or spot welding and are not particularly limited.

The first and second side walls 111 and 112 may be substantially perpendicular to the second direction (for example, the Y-axis direction). Each of the third and fourth side walls 113 and 114 may be substantially perpendicular to the first direction (for example, the X-axis direction). In some embodiments, the first and second side walls 111 and 112 may cover side surfaces of the plate part 110P. In some embodiments, the third and fourth side walls 113 and 114 may be on the plate part 110P.

In some embodiments, the first to fourth side walls 111, 112, 113, and 114 may be provided by an extrusion process. According to example embodiments, the first to fourth side walls 111, 112, 113, and 114 may each include an internal empty space, thus reducing the weight of the side wall 110S. According to example embodiments, the empty space of each of the first to fourth side walls 111, 112, 113, and 114 may be a venting path of a gas or a channel of a refrigerant.

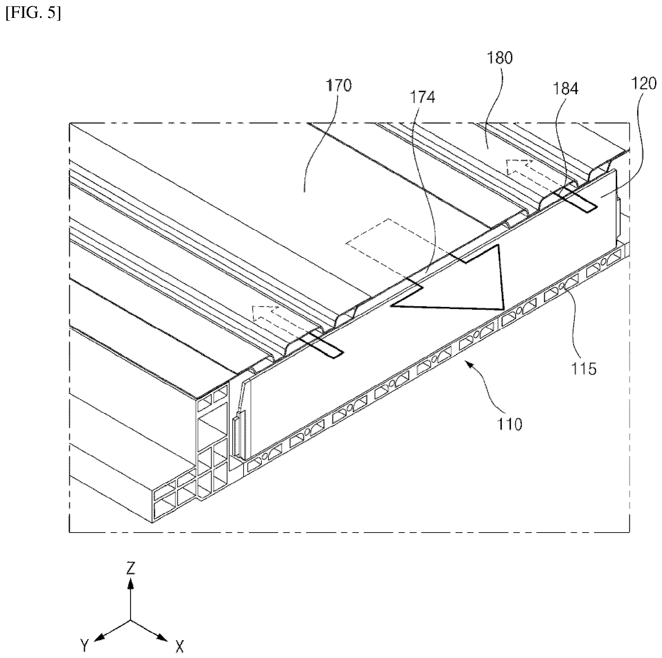

The plate part 110P forming the bottom of the lower case 110 may be provided with a first cooling channel 115 (see FIG. 5) passing through the plate part 110P. The first cooling channel 115 may be configured to allow a cooling fluid to flow therethrough to remove heat generated from the battery cells 120. The cooling fluid may be, for example, water or air.

Hereinafter, the technical idea of the present invention will be described with reference to an embodiment in which the plurality of battery cells 120 form a battery assembly that does not include a module frame. However, the above description is intended to provide only a non-limiting example and thus should not be understood as limiting the technical idea of the present invention in any sense. Based on the above description, technicians of ordinary skill in the art will be able to easily derive an embodiment in which battery cells are directly mounted in a pack case, as well as a battery pack employing a plurality of battery assemblies each including a module frame.

The center beam 130 may isolate elements mounted on the lower case 110 from each other. Accordingly, the center beam 130 may prevent an undesired short circuit from occurring between the plurality of battery cells 120 while protecting the plurality of battery cells 120.

The center beam 130 may extend in the first direction (e.g., the X-axis direction) between the third and fourth side walls 113 and 114. In some embodiments, the center beam 130 may meet the third and fourth side walls 113 and 114. In some embodiments, the center beam 130 may isolate the plurality of battery cells 120 from each other in the second direction (e.g., the Y-axis direction). The center beam 130 may be interposed between the plurality of battery cells 120.

An arrangement of the center beam 130 and the plurality of battery cells 120 shown in FIG. 1 is a non-limiting example and does not limit the technical idea of the present invention in any sense. A battery pack that includes various arrangements and numbers of a center beam and battery assemblies will be easily derived by those of ordinary skill in the art, based on the above description.

The plurality of venting devices 140 may be coupled to the fourth side wall 114. The fourth side wall 114 may include a plurality of exhaust holes connected to the plurality of venting devices 140. The plurality of exhaust holes may be configured to provide a path in which a gas and heat are discharged from the inside of the battery pack 100.

The plurality of venting devices 140 may be configured to delay thermal propagation by discharging a high-temperature gas from the inside of the battery pack 100 to the outside when at least one of the plurality of battery cells 120 is in a thermal runaway state.

Here, the thermal runaway state of the plurality of battery cells 120 is a state in which a change of temperature of the plurality of battery cells 120 accelerates the change of temperature, i.e., an uncontrollable positive feedback. The temperature of the plurality of battery cells 120 that are in the thermal runaway state may sharply increase and a large amount of a high-pressure gas and combustion debris may be discharged, which will be described in more detail below.

The plurality of first buried guides 151 may be on the side wall 110S. A plurality of first buried guides 151 may be on corners 110C of an upper surface of the side wall 110S. The plurality of first buried guides 151 may be coupled to the corners 110C of the upper surface of the side wall 110S. The plurality of first buried guides 151 may be partially buried in the side wall 110S. The plurality of first buried guides 151 may partially protrude from the side wall 110S.

A plurality of second buried guides 153 may be on the side wall 110S. The plurality of second buried guides 153 may be on the upper surface of the side wall 110S. The plurality of second buried guides 153 may be interposed between the corners 110C of the side wall 110S. The plurality of second buried guides 153 may be interposed between the plurality of first buried guides 151. The plurality of second buried guides 153 may be coupled to the upper surface of the side wall 110S. The plurality of second buried guides 153 may be partially buried in the side wall 110S. The plurality of second buried guides 153 may partially protrude from the side wall 110S.

Each of the first and second buried guides 151 and 153 may include a metal material. Each of the first and second buried guides 151 and 153 may include, for example, aluminum. Each of the first and second buried guides 151 and 153 may include, for example, steel such as carbon steel, nickel steel, chromium steel, nickel chromium steel, or manganese steel.

The battery pack 100 may further include electronic components. In some embodiments, the electronic components may be mounted on the lower case 110. In some embodiments, the electronic components may be disposed between the fourth sidewall 114 on which the venting devices 140 are installed and the plurality of battery cells 120. In some embodiments, the electronic components may include electronic devices required to drive the battery pack 100.

In some embodiments, the electronic components may include, for example, a battery management system (BMS). The BMS may be configured to monitor, balance, and control the battery pack 100. In some embodiments, the monitoring of the battery pack 100 may include measuring voltages and currents of certain nodes inside the plurality of battery cells 120 and measuring temperatures at set positions in the battery pack 100. In some embodiments, the battery pack 100 may include measuring devices for measuring voltages, currents, and temperatures as described above.

The balancing of the battery pack 100 is an operation of reducing a deviation between the plurality of battery cells 120. The controlling of the battery pack 100 includes preventing overcharging, over-discharging, and overcurrent. Through monitoring, balancing, and controlling, the battery pack 100 may be operated under optimal conditions, thereby preventing a reduction of or reducing the lifespan of each of the plurality of battery cells 120.

In some embodiments, the electronic components may further include a cooling device, a power relay assembly (PRA), a safety plug, and the like. The cooling device may include a cooling fan. The cooling fan may circulate air in the battery pack 100 to prevent overheating of each of the plurality of battery cells 120. The PRA may be configured to supply or cut off power from a high-voltage battery to an external load (e.g., a motor of a vehicle). The PRA may cut off power supply to an external load (e.g., a motor of a vehicle) to protect the plurality of battery cells 120 and the external load (e.g., a motor of a vehicle), when abnormal voltage such as voltage surge occurs.

The battery pack 100 may further include a plurality of bus bars configured to electrically connect the plurality of battery cells 120. The plurality of battery cells 120 may be connected in series and/or in parallel by the plurality of bus bars. Accordingly, the battery pack 100 may be configured to output a high voltage to an external load (e.g., a motor of a vehicle).

The pack gasket 160 may include a material having elasticity in response to pressure applied thereto. The pack gasket 160 may include rubber synthesized from a material such as ethylene-propylene diene monomer (EPDM). When the lower case 110 and the upper case 170 are coupled to each other, the pack gasket 160 may be interposed between the lower case 110 and the upper case 170. The lower case 110 and the upper case 170 may press the pack gasket 160 to cause the pack gasket 160 to deform to a some extent. Accordingly, the battery pack 100 may be sealed, and an inner space of the battery pack 100 may be blocked from an external fluid.

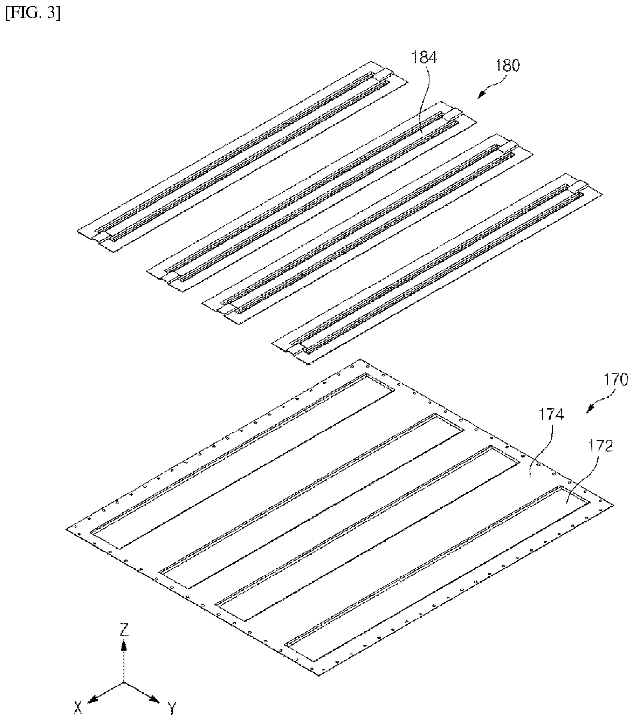

FIG. 3 is an exploded perspective view of major parts of the upper case 170 and the cooling device 180 of FIG. 1.

Referring to FIG. 3, the upper case 170 includes two or more concave portions 172 which are concave in the third direction (e.g., the Z-axis direction). In some embodiments, the concave portions 172 may extend in the first direction (e.g., the X-axis direction) in which the battery cells 120 are stacked. In some embodiments, the concave portions 172 may be configured to at least partially accommodate the cooling device 180.

In some embodiments, a thickness of an entire area of the upper case 170 may be generally constant. Here, the "generally" constant thickness should be understood to mean that the thickness of a thinnest portion of the upper case 170 is about 50% or more of the thickness of a thickest portion of the upper case 170.

In some embodiments, the thickness of the entire area of the upper case 170 may be substantially constant. Here, the "substantially" constant thickness should be understood to mean that thickness deviation between positions on the upper case 170 is 500 micrometers or less.

The upper case 170 may include at least one venting channel part 174 extending in the first direction (e.g., the X-axis direction). The venting channel part 174 may have a complementary structure obtained by forming the concave portions 172 with respect to the upper case 170 having the generally constant thickness. The venting channel part 174 appears to be flat when viewed over the upper surface of the upper case 170 as in FIG. 3. However, when viewed from the lower surface of the upper case 170, the two concave portions 162 have convex shapes and the venting channel part 174 has a relatively concave shape between the two concave portions 162.

The cooling device 180 is configured to be accommodated in the concave portion 172 of the upper case 170. The cooling device 180 includes a second cooling channel 184 configured to allow a cooling fluid to flow therein. The second cooling channel 184 may extend in the first direction (e.g., the X-axis direction).

The second cooling channel 184 may be configured to allow a cooling fluid (e.g., water or air) supplied from the outside to flow therein in one direction, and may extend in the first direction (e.g., the X-axis direction). In some embodiments, the second cooling channel 184 may be a single conduit. In some embodiments, the second cooling channel 184 may be a conduit type fluid path formed by both an upper surface of the concave portion 172 and the cooling device 180.

The second cooling channel 184 may be configured to be in physical surface contact with a bottom surface of the concave portion 172 for efficiently transferring heat with the upper case 170. In some embodiments, a dimension of the second cooling channel 184 in the second direction (e.g., the Y-axis direction) may be about 2 to 25 times a dimension thereof in the third direction (e.g., the Z-axis direction). In some embodiments, the dimension of the second cooling channel 184 in the second direction (e.g., the Y-axis direction) may be about 2 to 25 times, about 3 to 24 times, about 4 to 23 times, about 5 to about 22 times, about 6 to about 21 times, about 7 to about 20 times, about 8 to about 19 times, about 9 to about 18 times, about 10 to 17 times, about 11 to about 16 times, about 12 to about 15 times, or about 13 to about 14 times the dimension of the second cooling channel 184 in the third dimension (e.g., the Z-axis direction), or may be in a range between two of these numerical values.

The cooling device 180 is provided outside the pack body 101 and thus the battery cells 120 inside the pack body 101 sealed by the upper case 170 are not adversely affected even when a cooling fluid leaks. Therefore, the safety of the battery pack 100 may improve.

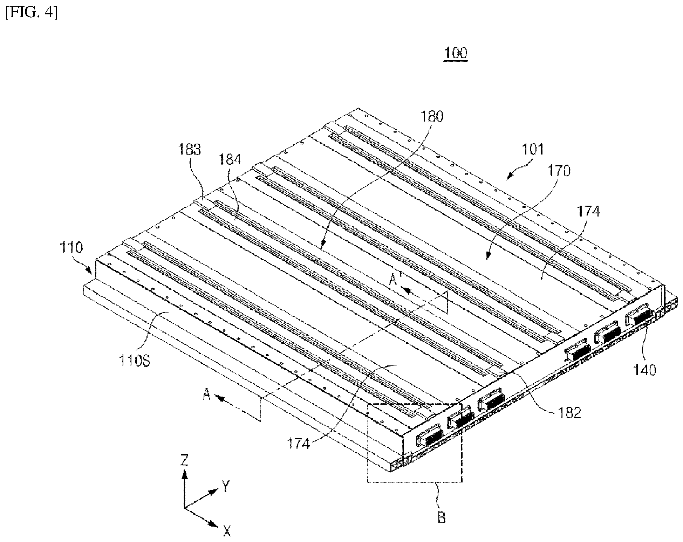

FIG. 4 is a perspective view of the battery pack 100 according to example embodiments of the present invention.

The battery pack 100 of FIG. 4 may be in a form in which the upper case 170 and the cooling device 180 of the battery pack 100 shown in FIG. 1 are assembled together on the lower case 110.

Referring to FIG. 4, the cooling device 180 is accommodated in the concave portions 172 (see FIG. 3) of the upper case 170. The bottom surface of the cooling device 180 may be in contact with surface of the concave portion 172.

The venting channel part 174 of the upper case 170 may be located between two cooling devices 180. The venting channel part 174 may face the battery cells 120 accommodated in the lower case 110. In addition, the venting channel part 174 facing the battery cells 120 may have a space corresponding to a height of the venting channel part 174. This configuration will be described in more detail below.

The battery pack 100 includes the plurality of venting devices 140. The plurality of venting devices 140 may be configured to fluidly communicate with the venting channel part 174. When a thermal event occurs in the battery cells 120, a gas generated from the battery cells 120 may be guided to flow in the second direction (e.g., the Y-axis direction) through the venting channel part 174. Thereafter, the gas may be discharged to the outside of the battery pack 100 through the venting device 140. In some embodiments, the battery pack 100 may further include a guide structure for guiding the gas to flow between the venting channel part 174 and the venting device 140.

In some embodiments, the cooling device 180 may be coupled to the upper case 170 by brazing. In some embodiments, the cooling device 180 may be coupled to the upper case 170 by welding or screwing.

In some embodiments, the upper case 170 may be formed of aluminum (Al) or an Al alloy. In some embodiments, the upper case 170 may further include a fire-resistant surface treated layer on the lower surface thereof. The fire-resistant surface treated layer may be a layer formed by performing fire-resistant surface treatment on the lower surface of the upper case 170 formed the Al or Al alloy. Fire-resistant surface treatment may be, for example, anodizing, coating with a fire-resistant layer or the like but the present invention is not limited thereto.

In some embodiments, in the cooling device 180, an inlet port 182 may be provided at an inlet part through which a cooling fluid flows into the second cooling channel 184, and an outlet port 183 may be provided at an outlet part through which the cooling fluid is discharged from the second cooling channel 184. The inlet port 182 and the outlet port 183 may extend while being spaced apart from the pack main body 101. Furthermore, the inlet port 182 and the outlet port 183 may be connected to be in fluid communication with external conduits.

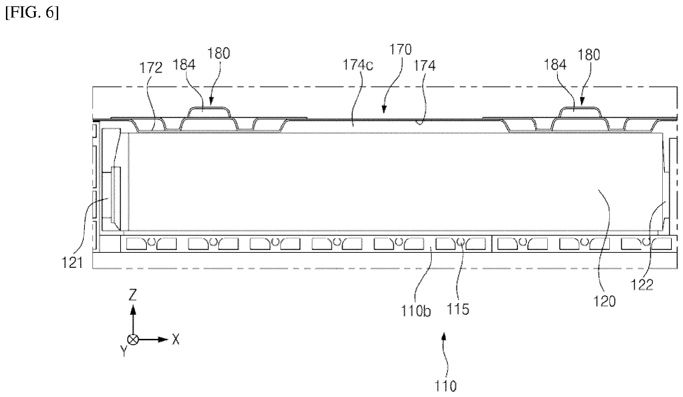

FIG. 5 is a partial cross-sectional perspective view of a cross section of the battery pack 100 of FIG. 4 taken along line A-A'. FIG. 6 is a partial cross-sectional view of the cross section of the battery pack 100 of FIG. 4 taken along line A-A'.

Referring to FIGS. 5 and 6, the plurality of battery cells 120 are stacked in the lower case 110 in the first direction (e.g., the X-axis direction), and the upper case 170 is coupled to the lower case 110. The cooling device 180 is provided in the concave portion 172 of the upper case 170.

The first cooling channel 115 is provided in the lower case 110, and the second cooling channel 184 is provided in the cooling device 180. The upper case 170 includes the venting channel part 174 for discharging a gas generated from the battery cells 120.

The venting channel part 174 has a certain space between the battery cells 120 arranged in the first direction (e.g., the X-axis direction), and the space serves as a venting flow path 174c in which a gas generated from the battery cells 120 flows to the outside. That is, the venting channel part 174 defines the venting flow path 174c configured to discharge the gas.

The gas generated from the battery cells 120 may be guided in the first direction (e.g., the X-axis direction) through the venting flow path 174c and thereafter be discharged to the outside through the venting device 140 (see FIG. 4).

In some embodiments, a direction in which the cooling fluid flows in the second cooling channel 184 may be opposite to a direction in which a gas flows in the venting channel part 174. In some other embodiments, the direction in which the cooling fluid flows in the second cooling channel 184 may be the same as the direction in which a gas flows in the venting channel part 174.

The first cooling channel 115, the second cooling channel 184, and the venting channel part 174 may extend in the first direction (e.g., the X-axis direction). The venting channel part 174 may be disposed between two second cooling channels 184.

In some embodiments, the plurality of battery cells 120 include a first cell lead 121 and a second cell lead 122 that are disposed at opposite ends thereof in the second direction (e.g., the Y-axis direction). Because the plurality of battery cells 120 are stacked in the first direction (e.g., the X-axis direction), the first cell leads 121 and the second cell leads 122 may also be arranged in the first direction (e.g., the X-axis direction).

In some embodiments, the concave portion 172 may be positioned more adjacent to the cell leads 121 and 122 of the battery cells 120 than the venting channel part 174. In some embodiments, the concave portion 172 may be disposed to overlap the cell leads 121 and 122 in the third direction (e.g., the Z-axis direction).

In some embodiments, the venting channel part 174 defining the venting flow path 174c may be located on central areas of the battery cells 120 and extend in the first direction (e.g., the X-axis direction). Therefore, one of the concave portions 172 at opposite sides of the venting channel portion 174 may be located closer to the first cell leads 121 than the venting channel part 174, and the other may be located closer to the second cell leads 122 than the venting channel part 174. In some embodiments, one of the concave portions 172 may be disposed to overlap the first cell leads 121 in the third direction (e.g., the Z-axis direction), and the other may be disposed to overlap the second cell leads 122 in the third direction (e.g., the Z-axis direction).

Parts of the battery pack 100 whose temperatures generally increase during the charging and discharging of the battery pack 100 are close to the cell leads 121 and 122. Conventionally, a flow path for cooling is provided even in the vicinity of the center of the battery cell 120 whose temperature does not increase to a large extent and that is thus relatively low in terms of necessity for cooling. In addition, the flow path for cooling is provided to the bottom and lid of a battery pack and thus a flow path for discharging a gas generated from the battery cell 120 due to a thermal event is insufficient. As a result, when the thermal event occurs in the battery cells 120, a function of alleviating an increase in pressure in the battery cells 120 and blocking thermal propagation is insufficient.

In the present invention, a flow path for discharging a gas generated in the battery cell 120 is provided near the center of the battery cell 120 instead of a flow path for cooling, so that thermal propagation and an increase in pressure in the battery cell 120 may be sufficiently alleviated when the thermal propagation occurs. In addition, a flow path for cooling the battery cell 120 is generally provided near the cell leads 121 and 122 and outside the pack body 101, so that even when a cooling fluid leaks, the battery cells 120 may not be adversely affected.

In some embodiments, the thickness of the upper case 170 may be substantially constant over the entire area. As shown in FIG. 6, a thickness of the upper case 170 at the concave portion 172 in the third direction (e.g., the Z-axis direction) may be substantially the same as the thickness of the upper case 170 at the venting channel part 174 in the third direction (e.g., the Z-axis direction). In some embodiments, a thickness of the upper case 170 between the concave portion 172 and the venting channel part 174 may be the same as the thickness of the upper case 170 at the concave portion 172 in the third direction (e.g., the Z-axis direction) and/or the thickness of the upper case 170 at the venting channel part 174 in the third direction (e.g., the Z-axis direction).

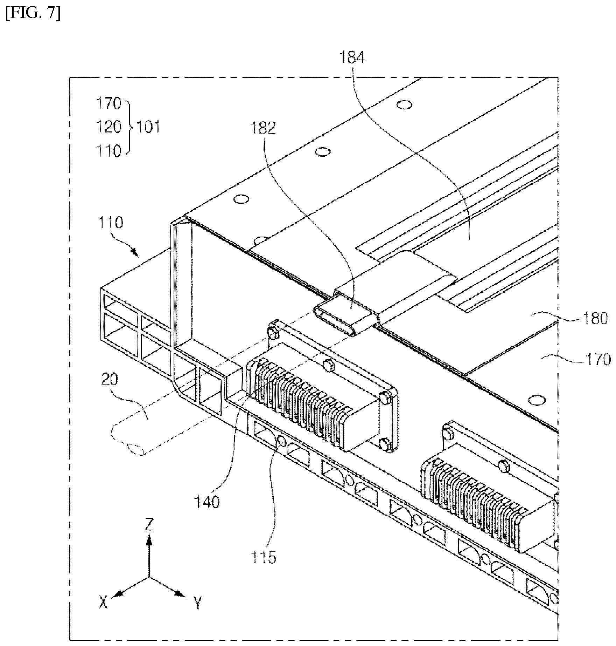

FIG. 7 is a partially enlarged view of a part B of FIG. 4.

Referring to FIG. 7, an inlet part of the second cooling channel 184 may include the inlet port 182, and the inlet port 182 may be spaced apart from the pack body 101 and connected to an external conduit 20. In the same manner, an outlet part of the second cooling channel 184 may include an outlet port (not shown), and the outlet port may be spaced apart from the pack body 101 and connected to an external conduit (not shown).

As shown in FIG. 7, because the cooling device 180 is configured separately from the pack body 101, the cooling device 180 may not adversely affect the battery cells 120 in the pack body 101 even when the cooling fluid leaks.

### (Second Embodiment)

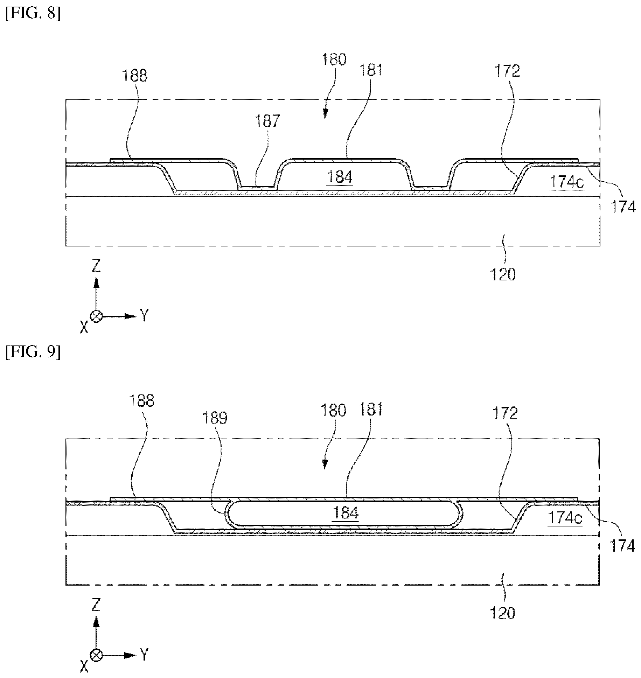

FIG. 8 is a cross-sectional view of a cooling device 180 according to example embodiments of the present invention.

Referring to FIG. 8, the cooling device 180 may include a flat plate part 181 extending vertically in the third direction (e.g., the Z-axis direction) to form the second cooling channel 184, and a fixing part 187 that is in contact with the upper case 170 to fix the cooling device 180 onto the upper case 170. The fixing part 187 may be fixed in the concave portion 172, for example, by brazing bonding.

The fixing part 187 and the flat plate part 181 may form the second cooling channel 184 together with the upper case 170. That is, the bottom of the second cooling channel 184 may be defined by the upper surface of the bottom surface of the concave portion 172 of the upper case 170. The flat plate part 181 may be bent and extend and thereafter be connected to the fixing part 187.

In the embodiment of FIG. 8, the cooling fluid passing through the second cooling channel 184 comes into direct contact with the upper surface of the upper case 170 and thus cooling efficiency may be high.

In some embodiments, the cooling device 180 may further include a wing part 188 extending from the fixing part 187 to be in contact with the upper case 170. The wing part 188 may cause heat transferred from the fixing part 187 to be quickly diffused in a horizontal direction (i.e., the first direction and/or the second direction) to be discharged to the outside, thereby contributing to smooth cooling of the battery cells 120.

### (Third Embodiment)

FIG. 9 is a cross-sectional view of a cooling device 180 according to additional example embodiments of the present invention.

Referring to FIG. 9, the cooling device 180 may include a flat plate part 181 extending vertically in the third direction (e.g., the Z-axis direction) to form the second cooling channel 184, and a conduit part 189 defining the second cooling channel 184 together with the flat plate part 181. The bottom of the conduit part 189 may be fixed in the concave portion 172, for example, by brazing bonding.

Although it is illustrated in the embodiment of FIG. 9 that the flat plate part 181 and the conduit part 189 define the second cooling channel 184 together, in another embodiment, the second cooling channel 184 may be defined by only the conduit part 189 and the conduit part 189 may be simply attached to the flat plate part 181. In any case, because the bottom surface of the conduit part 189 is further interposed between the bottom surface of the second cooling channel 184 and the bottom surface of the upper concave portion 172, heat transfer efficiency may be slightly lower than that in the embodiment of FIG. 8. However, the second cooling channel 184 is defined by an integral structure and thus a risk of leakage of the cooling fluid may decrease. In some examples, the second cooling channel 184 may be formed by monolithically forming the flat plate part 181 and the conduit part 189.

In some embodiments, the cooling device 180 may further include a wing part 188 extending from the flat plate part 181 to be in contact with the upper case 170. The wing part 188 may cause heat transferred from the flat panel part 181 to be quickly diffused in a horizontal direction (i.e., the first direction and/or the second direction) to be discharged to the outside, thereby contributing to smooth cooling of the battery cells 120.

Although the embodiments of the present invention have been described above in detail, the present invention may be implemented in many different forms by those of ordinary skill in the art, to which the present invention pertains, without departing from the spirit and scope of the present invention defined in the appended claims. Therefore, it should be understood that all modifications in embodiments of the present invention fall within the scope of the present invention.

## Claims

1. A battery pack comprising:
a pack body; and
a cooling device outside the pack body,
wherein the pack body comprises:
a plurality of battery cells stacked in a first direction;
a first case configured to accommodate the plurality of battery cells, and including a first cooling channel configured to cool the plurality of battery cells; and
a second case defining an inner space for accommodation of the plurality of battery cells together with the first case,
wherein the cooling device comprises a second cooling channel on the second case, the second cooling channel being configured to cool the plurality of battery cells while in contact with the second case, and
wherein the second case comprises:
two or more concave portions configured to accommodate the cooling device; and
a venting flow path provided between the concave portions and configured to discharge a gas generated in the plurality of battery cells.

2. The battery pack of claim 1, wherein the second cooling channel extends longitudinally in the first direction, and
the concave portions are provided to overlap cell leads of the plurality of battery cells stacked in the first direction.

3. The battery pack of claim 2, wherein each of the plurality of battery cells comprises a first cell lead and a second cell lead at opposite ends thereof in a second direction, and
one of the concave portions is provided to overlap the first cell lead of each of the plurality of battery cells, which are arranged in the first direction and in a third direction, and
another of the concave portions is provided to overlap the second cell lead of each of the plurality of battery cells, which are arranged in the first direction and in the third direction.

4. The battery pack of claim 3, wherein the venting flow path extends in the first direction between the first cell leads and the second cell leads that are arranged in the first direction.

5. The battery pack of claim 4, wherein a direction in which a cooling fluid flows through the second cooling channel and a direction in which a gas flows through the venting flow path are opposite to each other.

6. The battery pack of claim 1, wherein the second case is formed of aluminum or an aluminum alloy, and a surface of the second case facing the plurality of battery cells is fire-resistant surface treated.

7. The battery pack of claim 1, wherein an inlet part of the second cooling channel is provided with an inlet port, and
an outlet part of the second cooling channel is provided with an outlet port,
wherein each of the inlet port and the outlet port extends from the pack body to connect to an external conduit.

8. The battery pack of claim 1, wherein the venting flow path is defined by a venting channel part between the two or more concave portions, and is in fluid communication with a venting device on the first case.

9. The battery pack of claim 8, wherein a thickness of the second case in a second direction perpendicular to the first direction at the concave portion, a thickness of the second case in the second direction at the venting channel part, and a thickness of the second case between the concave portions and the venting channel part are substantially equal.

10. The battery pack of claim 8, wherein a thickness of the second case is substantially constant over an entire area.

11. The battery pack of claim 1, wherein the cooling device is coupled to the second case by brazing.

12. A battery pack comprising:
a plurality of battery cells stacked in a first direction;
a first case configured to accommodate the plurality of battery cells, and including a first cooling channel configured to cool the plurality of battery cells; and
a second case configured to define an inner space for accommodation of the plurality of battery cells, together with the first case,
wherein the second case has an uneven shape, has a constant thickness, and includes a venting flow path on a surface of the second case to discharge a gas generated in the plurality of battery cells, and a plurality of concave portions on a second surface of the second case.

13. The battery pack of claim 12, further comprising a cooling device accommodated in the plurality of concave portions, and including a second cooling channel for cooling the plurality of battery cells.

14. The battery pack of claim 12, further comprising a second cooling channel in the first case to cool the plurality of battery cells.

15. The battery pack of claim 12, wherein a venting channel part defining the venting flow path and the concave portions have complementary shapes.
